(19) Europäisches Patentamt
European Patent Office
Office européen des brevets

(11) Veröffentlichungsnummer: **0 367 053 A2**

(12) **EUROPÄISCHE PATENTANMELDUNG**

(21) Anmeldenummer: **89119551.3**

(22) Anmeldetag: **21.10.89**

(51) Int. Cl.5 **C08L 63/00 , //(C08L63/00, 81:06)**

(30) Priorität: **31.10.88 DE 3837015**

(43) Veröffentlichungstag der Anmeldung:
**09.05.90 Patentblatt 90/19**

(84) Benannte Vertragsstaaten:
**CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Weber, Thomas, Dr.**
**Bruesseler Ring 4**
**D-6700 Ludwigshafen(DE)**
Erfinder: **Recker, Hans-Gert, Dr.**
**2 Clove Blossom**
**Irvine, C.A. 92714(US)**
Erfinder: **Heckmann, Walter, Dr.**
**Geiersbergstrasse 2**
**D-6940 Weinheim(DE)**
Erfinder: **Tesch, Helmut, Dr.**
**Im Schlittweg 9**
**D-6701 Roedersheim-Gronau(DE)**
Erfinder: **Alstaedt, Volker, Dr.**
**Marienbaderstrasse 2**
**D-6084 Gernsheim(DE)**
Erfinder: **Ittemann, Peter, Dr.**
**217 Manor House Mill**
**Fort Mill, S.C. 29715(US)**
Erfinder: **Folda, Thomas, Dr.**
**Adenauerstrasse 8**
**D-6719 Neuleiningen(DE)**

(54) **Härtbare, zähmodifizierte Epoxidharze.**

(57) Die Erfindung betrifft härtbare, zähmodifizierte Epoxidharz-Mischungen aus

A. einer aromatischen Epoxidverbindung,

B. einem Aminhärter und

C. 10 bis 40 Gew.% eines reaktive Gruppen enthaltenden aromatischen thermoplastischen Oligomeren, vorzugsweise eines Polyethersulfons, wobei die Komponenten zu Beginn der Härtung in einem einphasigen Zustand vorliegen und erst gegen Ende der Härtung eine Phasentrennung auftritt. Die Epoxidharz-Mischungen eignen sich zur Herstellung von Hochleistungsverbundwerkstoffen.

EP 0 367 053 A2

## Härtbare, zähmodifizierte Epoxidharze

Die Erfindung betrifft härtbare, zähmodifizierte Epoxidharz-Mischungen, die zu hochtemperaturbeständigen Formteilen hoher Steifigkeit und Festigkeit gehärtet werden können.

Aus der EP-A 193 082 (US-A 4 656 207) ist bekannt, daß die Zähigkeit von ausgehärteten Formteilen aus Epoxidharzen durch den Zusatz bestimmter oligomerer aromatischer thermoplastischer Polymerer erhöht werden kann. Im gehärteten Produkt liegen zwei diskrete glasartige Phasen vor, von denen eine mehr, die andere weniger Thermoplast enthält.

Beim Nacharbeiten der Beispiele von EP-A 193 082 hat es sich gezeigt, daß kurz nach Einsetzen des Härtungsvorgangs eine Phasentrennung auftritt. Hierbei wird eine erste Mischungslücke durchlaufen, die graphisch als eine geschlossene Kurve 1 in der Abbildung veranschaulicht ist. Auf der Abszisse ist das Verhältnis Epoxidharz A + B zu Thermoplast C aufgetragen, die Ordinate stellt die fortschreitende Härtung dar. In einer Mischungslücke liegen zwei Phasen nebeneinander vor, deren Zusammensetzung dadurch bestimmt wird, daß man eine Parallele zur Abszisse zieht, wobei dann die Berührungspunkte dieser Linie mit dem Einphasengebiet die Zusammensetzung der beiden Phasen beschreiben. In der Abbildung stellen also die Punkte Y und Z die Zusammensetzung der beiden Phasen dar, die sich in dem betrachteten Stadium des Härtungsvorgangs bei einer Harzmischung mit dem Gehalt von X % Thermoplast ausbilden. Im weiteren Verlauf des Härtungsvorgangs bildet sich dann wieder ein einphasiger Bereich aus; gegen Ende der Härtung erfolgt eine weitere Phasentrennung, die in der Abbildung als eine nach oben offene Kurve II veranschaulicht ist.

Der Verlauf der Kurve I, d.h. die Lage und das Ausmaß der Mischungslücke, die sich bei den Epoxidharzmischungen nach EP-A 193 082 ausbildet, hängt nun von mehreren Faktoren ab: von der Art und der Menge der eingesetzten Komponenten, von der Härtungstemperatur, von der Aufheizgeschwindigkeit beim Härten, von verschiedenen Haltestufen beim Aufheizen, sowie von deren Dauer. Die Lage dieser Mischungslücke beeinflußt sehr stark den Chemismus der Vernetzung, da hier zwei sich bildende Netzwerke nebeneinander vorliegen. Die Vorgeschichte des Härtungsgemisches in ihrem Anfangsbereich hat also einen erheblichen Einfluß auf die sich ausbildenden, im anschließenden Einphasengebiet sich wieder homogen vermischenden Netzwerkstrukturen. Diese Netzwerkstrukturen beeinflussen aber wiederum sehr stark die mechanischen Eigenschaften der fertig ausgehärteten Formteile. Ausgehend von ein und derselben Epoxidharz-Zusammensetzung erhält man also je nach Härtungstemperatur und Heizzyklus unterschiedliche Netzwerkstrukturen. Unterschiedliche Netzwerkstrukturen haben aber unterschiedliche mechanische Eigenschaftswerte zur Folge. Da aber in der Praxis, vor allem bei der Herstellung dicker Formteile, die Härtungstemperaturen innerhalb eines härtenden Formteils schwanken und zu dem von den Verarbeitern unterschiedliche Heizzyklen angewandt werden, wäre es wünschenswert, Epoxidharz-Mischungen zu entwickeln, die eine von der Härtungstemperatur und von der Art des Heizzyklus unabhängige Morphologie aufweisen, so daß beim Härten Formteile mit gleichmäßig guten mechanischen Eigenschaften erhalten und Produktschwankungen somit vermieden werden.

Diese Aufgabe wird erfindungsgemäß dadurch gelöst, daß man Art und Mengenverhältnisse der Komponenten der Epoxid-Mischung so wählt, daß zu Beginn der Härtung ein homogenes, einphasiges System vorliegt, und erst gegen Ende der Härtung eine Phasentrennung auftritt, welche im ausgehärteten Produkt eine zweiphasige Morphologie zur Folge hat.

Ob diese Bedingung bei einer gewählten Epoxidharz-Mischung erfüllt ist, läßt sich leicht durch folgenden Test feststellen: Zunächst wird in der Schmelze (z.B. bei 120 °C) das Oligomer mit soviel Epoxid versetzt, daß seine Endgruppen verkappt werden. Nach spätestens 2 h erhält man ein homogenes Gemisch. Dann wird bei 120 °C das restliche Epoxid zugesetzt und dann der pulverförmige Härter eingerührt. Von der erhaltenen Dispersion wird ein Tropfen zwischen zwei im Abstand von 50 µm gehaltene Objektträger gegeben, die sich unter einem Mikroskop (Dünnschichtphasenkontrast, 260-fache Vergrößerung) befinden. Durch einen Heiztisch sind die Objektträger und damit auch die Harzmischung beheizbar. Erst wird 2 h auf 177 °C erhitzt, dann wird die Temperatur auf 200 °C gesteigert und so lange erhitzt bis die Harzmischung ausgehärtet ist. Die Morphologie der Harzmischung mit fortschreitender Härtung kann durch das Mikroskop beobachtet und gefilmt werden. Homogenität und Phasentrennung sind leicht erkennbar.

Gegenstand der Erfindung sind härtbare, zähmodifizierte Epoxidharzmischungen, enthaltend

A. eine aromatische, mindestens bifunktionelle Epoxidverbindung,

B. einen mindestens bifunktionellen Aminhärter,

C. 10 bis 40 Gew.%, bezogen auf A + B + C, eines reaktive Gruppen enthaltenden, aromatischen thermoplastischen Polymeren mit einem mittleren Molekulargewicht (Zahlenmittel) zwischen 2 000 und 20 000 und einer Glasübergangstemperatur oberhalb von 120 °C, mit der Maßgabe, daß Epoxidgruppen und

die aktiven Wasserstoffatome der Komponenten B und C im Verhältnis 0,8 : 1 bis 1,6 : 1 vorliegen, wobei bei der gewählten Zusammensetzung der Komponenten zu Beginn des Härtungsvorgangs ein homogenes, einphasiges System vorliegt, und während der Härtung nur ein einziger Entmischungsvorgang (Phasentrennung) auftritt, welcher im ausgehärteten Produkt eine zweiphasige Morphologie zur Folge hat.

A. Epoxidverbindungen sind nieder- oder hochmolekulare Verbindungen mit end- oder seitenständigen oder in cyclischen Systeme eingebauten Epoxidgruppen. Sie können flüssig, halbfest oder fest sein. Besonders geeignet sind Umsetzungsprodukte von mehrfach funktionellen Alkoholen, Phenolen, cycloaliphatischen Carbonsäuren, aromatischen Aminen oder Aminophenolen mit Epichlorhydrin, sowie cycloaliphatische Epoxide und cycloaliphatische Epoxidester. Es können auch Mischungen von verschiedenen Epoxidverbindungen zum Einsatz kommen. Bevorzugt sind Bisphenol-A-Diglycidylether, Bisphenol-F-Diglycidylether und Triglycidylether von Paraaminophenolen, sowie Mischungen dieser Epoxidverbindungen. Besonders günstige Ergebnisse werden mit der Epoxidverbindung der Formel I auf Basis von Dicyclopentadien nach US 3,535,734 erhalten. Weitere geeignete Epoxidverbindungen sind in der EP-A-193 082 aufgezählt. Die Epoxidverbindungen haben eine Glastemperatur von vorzugsweise unter 20 °C.

B. Bevorzugte Aminhärter sind aromatische Diamine, wie z.B. 4,4-Diaminodiphenylsulfon, 3,3′-Diaminodiphenylsulfon, Diaminodiphenylketon und Diaminodiphenylether, aber auch Diamine mit vier Phenylenresten, wie sie z.B. in EP-A-126 494 beschrieben sind. Grundsätzlich sind auch andere übliche Epoxidhärter, wie Dicyandiamid und Bortrifluorid/Amin-Komplexe geeignet. Weitere Aminhärter sind in EP-A-193 082 beschrieben.

C. Das aromatische Oligomere enthält funktionelle Gruppen, welche mit den Epoxidgruppen der Epoxidverbindung reagieren können, z.B. Amin-, Hydroxy- oder Carboxylgruppen. Bevorzugt sind Oligomere mit zwei Amino-Endgruppen. Ihr mittleres Molekulargewicht liegt zwischen 2000 und 20 000, vorzugsweise zwischen 4 000 und 12 000; ihre Glastemperatur über 120 °C vorzugsweise zwischen 140 °C und 220 °C. Bevorzugt sind aminterminierte Polysulfone und Polyethersulfone, sowie entsprechende Copolymere. Weitere Einzelheiten, insbesondere über ihre Herstellung sind EP-A-193 082 zu entnehmen. Das aromatische Oligomer ist in der erfindungsgemäßen Epxoidharzmischung in Mengen von 10 bis 40, vorzugsweise von 10 bis 25 Gew.% enthalten.

In der Epoxidharzmischung beträgt das Verhältnis Epoxidgruppen zu aktiven Wasserstoffatomen der Komponente B und C 0,8 : 1 bis 1,6 : 1, vorzugsweise 0,9 : 1 bis 1,4 : 1. Besonders bevorzugt ist ein geringer Überschuß an Epoxidharzgruppen.

Die Epoxidharzmischung kann ferner die üblichen Zusatzstoffe, wie Katalysatoren, z.B. Phosphine, Elastifiziermittel, wie Butadien/Acrylnitrilkautschuke, sowie Polyamide enthalten.

Zur Herstellung der erfindungsgemäßen Epoxidharz-Mischung kann man die flüssige Komponenten unter Rühren zusammengeben, bzw. eine feste Komponente in der flüssigen lösen. Bevorzugt wird man aber zunächst die Epoxidverbindung A und das reaktive Gruppen tragende Oligomere C zur Vorreaktion bringen, wobei gegebenenfalls zunächst nur ein äquivalenter Anteil Epoxidverbindung eingesetzt wird. Diese Vorreaktion wird vorzugsweise zwischen 80 und 140 °C durchgeführt und dauert im allgemeinen 30 bis 360 min. Dann wird der Härter B und gegebenenfalls die restliche Epoxidverbindung A sowie ein Härtungskatalysator zugegeben und die Härtungsreaktion eingeleitet, die bei Temperaturen zwischen 100 und 240 °C abläuft.

Das ausgehärtete Produkt zeigt bei mikroskopischer Betrachtung deutlich zwei getrennte Phasen, wobei die kohärente Phase wahrscheinlich thermoplastreicher und die disperse Phase thermoplastärmer ist.

Der Gehalt an disperer Phase beträgt im allgemeinen 30 bis 70 Vol.%, die Größe der dispergierten Domänen liegt zwischen 0,1 und 100 µm. Die ausgehärteten erfindungsgemäßen Produkte zeichnen sich durch extrem hohe Werte für Bruchenergie $G_{IC}$ und Spannungsintensitätsfaktor $K_{IC}$ aus. Die Bedeutung und Meßmethoden zur Bestimmung dieser Werte sind ausführlich in EP-A-193 082 beschrieben, wo auch weitere Literatur hierzu angegeben ist. Die $K_{IC}$-Werte liegen im allgemeinen oberhalb von 1,2 [MPa•m1/2], vorzugsweise oberhalb von 1,4 [MPa•m1/2].

Die erfindungsgemäßen Epoxidharz-Mischungen eignen sich zur Herstellung von temperaturbeständigen Formteilen mit hoher Steifigkeit, Zähigkeit und Dimensionsstabilität, z.B. für Teile, die in Luft- und Raumfahrt Anwendung finden, für Strukturklebstoffe und für gedruckte Schaltungen.

Besonders geeignet sind die Epoxidharz-Mischungen zur Herstellung von Hochleistungsverbundwerkstoffen. Diese enthalten im allgemeinen 30 bis 70 Vol.% Verstärkungsfasern, vorzugsweise aus Kohlenstoff, Glas oder aromatischem Polymaid, beispielsweise in Form von Gewebe, parallelen Fasergelegen oder Einzel-Rovings. Zur Herstellung dieser Verbundwerkstoffe tränkt man die Fasern mit der gegebenenfalls vorerhitzten Epoxidharz-Mischung und führt dann, gegebenenfalls nach Verformen des Prepregs, die Härtung durch.

Die in den Beispielen genannten Teile beziehen sich auf das Gewicht.

Beispiel 1

22 Teile Bisphenol F-Diglycidylether wurden bei 120° C mit 0,004 Teilen Triphenylphosphin und 20 Teilen eines oligomeren, beidseits mit Hydroxylgruppen terminierten Polysulfon/Polyethersulfon-Copolymeren (mit statistischer Verteilung der Comonomeren, mittleres Molekulargewicht von 6000, Glasübergangstemperatur 170° C) solange gerührt, bis eine homogene Lösung entstanden war. Dann wurden 33 Teile des Polyglycidylethers der Formel I (mit n = 0,1) zugesetzt. Zu dem homogenen Gemisch werden schließlich 25 Teile 4,4′-Diaminodiphenylsulfon zugegeben, 2 h bei 177° C und dann 2 h bei 200° C erhitzt. Das Verhältnis Epoxidgruppen zu aktive Wasserstoffatome betrug dabei 1,4 : 1. Bei mikroskopischer Betrachtung zeigte sich, daß zu Beginn der Härtung eine homogene Mischung vorliegt, gegen Ende der Härtung wurde eine Phasentrennung beobachtet.

Das ausgehärtete Produkt zeigte einen $K_{IC}$-Wert von 1,3 [MPa•m1/2].

Vergleichsbeispiel

Beispiel 1 wurde wiederholt, wobei 54,5 Teile Bisphenol F-Diglycidylether, 25 Teile Copolymer und 20,5 Teile 4,4′-Diaminodiphenylsulfon eingesetzt wurden. Bei der Härtung wurde das Auftreten von 2 Mischungslücken beobachtet.

Das ausgehärtete Produkt zeigte einen $K_{IC}$-Wert von 0,98 [MPa•m1/2].

**Ansprüche**

1. Härtbare, zähmodifizierte Epoxidharzmischung, enthaltend
A. eine aromatische, mindestens bifunktionelle Epoxidverbindung,
B. einen mindestens bifunktionellen Aminhärter,
C. 10 bis 40 Gew.%, bezogen auf A + B + C, eines reaktive Gruppen enthaltenden, aromatischen thermoplastischen Polymeren mit einem mittleren Molekulargewicht (Zahlenmittel) zwischen 2 000 und 20 000 und einer Glasübergangstemperatur oberhalb von 120° C,
mit der Maßgabe, daß Epoxidgruppen und die aktiven Wasserstoffatome der Komponenten B und C im Verhältnis 0,8 : 1 bis 1,6 : 1 vorliegen, dadurch gekennzeichnet, daß bei der gewählten Zusammensetzung der Komponenten zu Beginn des Härtungsvorgangs ein homogenes, einphasiges System vorliegt und während der Härtung nur ein einziger Entmischungsvorgang (Phasentrennung) auftritt, welcher im ausgehärteten Produkt eine zweiphasige Morphologie zur Folge hat.

2. Epoxidharzmischung nach Anspruch 1, dadurch gekennzeichnet, daß die Komponente A mindestens teilweise aus folgender Verbindung besteht:

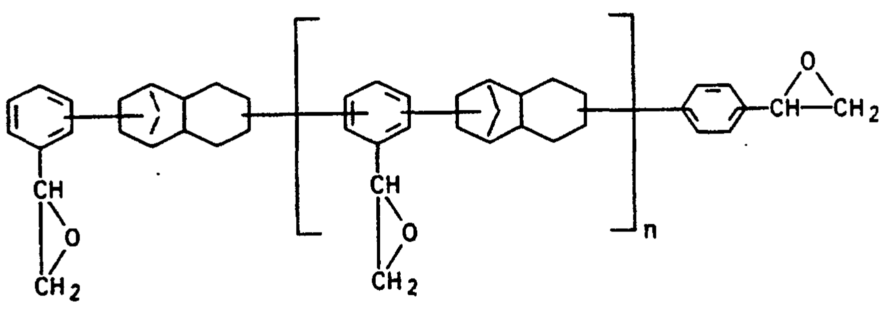 (I)

wobei n im Mittel zwischen 0 und 3 liegt.

3. Epoxidharzmischung nach Anspruch 1, dadurch gekennzeichnet, daß die Komponente B mindestens teilweise aus 4,4′-Diaminodiphenylsulfon oder 3,3′-Diaminodiphenylsulfon besteht.

4. Epoxidharzmischung nach Anspruch 1, dadurch gekennzeichnet, daß die Komponente C ein amin- oder hydroxylterminiertes Polysulfon oder Polyethersulfon ist.

5. Hochleistungsverbundwerkstoffe, enthaltend das Härtungsprodukt der Epoxidharz-Mischung nach Anspruch 1 und 30 bis 70 Vol.% Verstärkungsfasern.

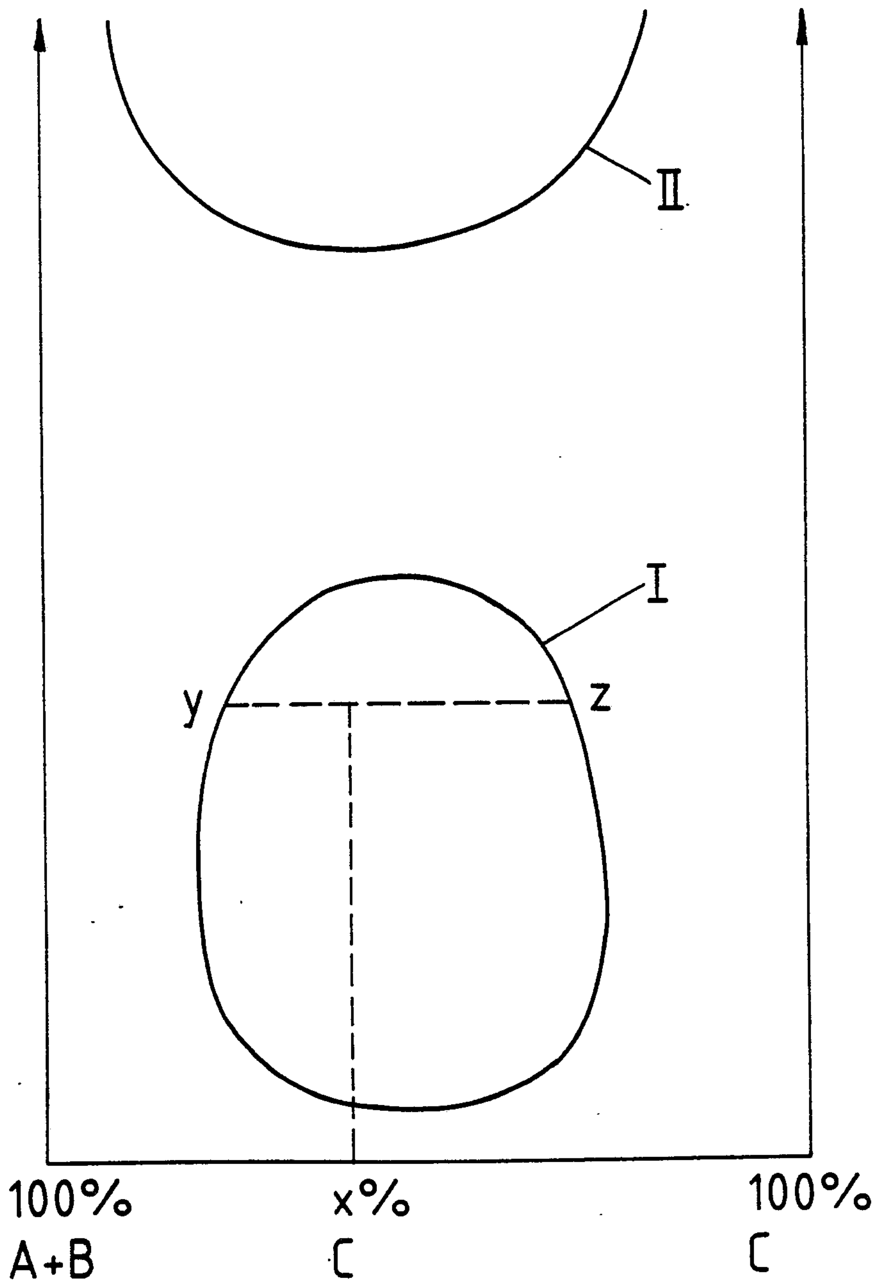
II
I
y
z
100%
A+B
x%
C
100%
C